Europäisches Patentamt

European Patent Office

Office européen des brevets

(11) Veröffentlichungsnummer: **0 352 403**

**A2**

(12) # EUROPÄISCHE PATENTANMELDUNG

(21) Anmeldenummer: 89105897.6

(51) Int. Cl.⁴: **F16L 23/02**

(22) Anmeldetag: 04.04.89

(30) Priorität: 29.07.88 DE 3825916

(43) Veröffentlichungstag der Anmeldung:
**31.01.90 Patentblatt 90/05**

(84) Benannte Vertragsstaaten:
**AT BE CH DE ES FR GB GR IT LI LU NL SE**

(71) Anmelder: **W.L. Gore & Associates GmbH**
**Hermann-Oberth-Strasse 22**
**D-8011 Putzbrunn(DE)**

(72) Erfinder: **Rüsch, Hans Jörg**
**Egerweg 8**
**D-8012 Ottobrunn(DE)**
Erfinder: **Gutsmiedl, Heinrich**
**Soinweg 11**
**D-8201 Flintsbach(DE)**

(74) Vertreter: **Klunker . Schmitt-Nilson . Hirsch**
**Winzererstrasse 106**
**D-8000 München 40(DE)**

(54) **Ringdichtung.**

(57) Um bei einer Ringdichtung eine hohe Stabilität bezüglich Querkräften sowie eine hohe Dichtigkeit zu erzielen, ohne daß beim Montieren der Ringdichtung in Emailflanschverbindungen zu hohe, die Emailflansche möglicherweise beschädigende Kräfte aufgebracht werden müssen, besitzt die Ringdichtung einen oder mehrere vorgepreßte Bereiche, an die ein bzw. mehrere nicht-vorgepreßte Stege anschließen. Bei der Montage können diese nicht-vorgepreßten Stege aufgrund ihrer relativ geringen Oberfläche mit wenig Kraftaufwand zusammengepreßt werden.

Fig. 1

EP 0 352 403 A2

## Ringdichtung

Die Erfindung betrifft eine Ringdichtung mit in Umfangsrichtung orientierter Materialstruktur.

Solche Ringdichtungen werden z.B. als sogenannte Einsteckdichtungen zwischen zwei mittels Schrauben gegeneinander gepreßte Stahl- oder Emaildichtungen gelegt und zur Erzielung der erforderlichen Dichtheit und Festigkeit unter Dickenverringerung beim Anziehen der Flansche gepreßt. Von der Anmelderin wurde bereits eine Ringdichtung aus extrudiertem PTFE vorgeschlagen. Ringdichtungen aus Material, dessen Struktur in Umfangsrichtung orientiert ist, insbesondere aus gerecktem PTFE, haben den Vorteil, daß sie extrem hohe Längskräfte aufzunehmen vermögen.

Derzeit werden als Ringdichtungen vornehmlich aus plattenförmigem Material ausgestanzte Dichtungen verwendet. Diese Dichtungen sind jedoch insoweit etwas problematisch, als sie, um die erheblichen Innenkräfte aufnehmen zu können, stark zwischen den Flanschen verpreßt werden. Das Zusammenpressen der Dichtung zwischen Stahlflanschen ist im allgemeinen weniger problematisch als bei Emailflanschen, denn die Emailflansche dürfen nicht zu stark belastet werden. Erfordert das Dichtungsmaterial hohe Flächenpressungen, so extreme Kräfte auf die die Flansche gegeneinanderdrückenden Bolzen aufgebracht werden. Die relativ empfindlichen Emailflansche können dabei beschädigt werden.

Man kann Dichtungen grundsätzlich vor dem Montieren vorpressen, damit sie die gewünschte Festigkeit haben. Insbesondere Emailflansche weisen jedoch an den Dichtungsflächen gewisse Unebenheiten auf, die es auszugleichen gilt. Das Ausgleichen geschieht dadurch, daß das Material zwischen den Flanschen bei der Montage zusammengepreßt wird.

Der Erfindung liegt die Aufgabe zugrunde, eine Ringdichtung der eingangs genannten Art zu schaffen, die
- erhebliche Drücke unbeschädigt aufzunehmen vermag, und
- Unebenheiten der Flansche auszugleichen vermag, ohne daß zum Verpressen der Dichtung erhebliche, die Flansche möglicherweise beschädigende Kräfte aufgebracht werden müssen, wobei das Dichtungsmaterial die auftretenden Querkräfte aufnehmen soll.

Erfindungsgemäß wird diese Aufgabe bei einer Ringdichtung mit in Umfangsrichtung orientierter Materialstruktur dadurch gelöst, daß die Dichtung in mindestens einem Teilbereich ihres (Radial-) Querschnitts vorgepreßt ist. Durch das teilweise Vorpressen wird eine Materialverdichtung in den vorgepreßten Bereichen und mithin eine erhebliche Festigkeit der Dichtung bei hoher Diffusionsdichtigkeit, d.h. Gasdichtigkeit, erreicht. Eine Vervollständigung der Dichtheit bei gleichzeitigem Ausgleich etwaiger Unebenheiten der Flanschflächen wird ermöglicht durch die nichtvorgepreßten Teilbereiche der Ringdichtung; denn da diese eine im Vergleich zur Gesamtfläche der Dichtung relativ geringe Oberfläche besitzen, sind nur relativ geringe Kräfte erforderlich, um die nicht-vorgepreßten Bereiche beim Gegeneinanderpressen der Flansche soweit zusammenzupressen, daß die Dichtung im fertig montierten Zustand eine einheitliche Dicke aufweist. Diese Dichtung zeichnet sich durch extrem hohe Festigkeit, insbesondere im Hinblick auf Querkräfte auf. Außerdem wird eine hervorragende Dichtigkeit erzielt. Da beim Zusammenpressen der Dichtung während der Montage relativ geringe Kräfte auf die Flansche aufgebracht werden müssen, eignet sich diese Dichtung besonders gut für Emailflansche, auch solche relativ großen Durchmessers.

Hinsichtlich der geometrischen Querschnittsform der Ringdichtung sind verschiedene Möglichkeiten gegeben, die sich für den einen oder anderen Anwendungsfall als besonders günstig erweisen können. Beispielsweise sieht die Erfindung in einer Weiterbildung vor, daß der oder die nichtvorgepreßten Bereiche auf den einander abgewandten beiden Dichtungsflächen-Seiten einen oder mehrere Stege bilden. Gegenüber einer nicht ganz so günstigen Ausführungsform, bei der ein Steg möglicherweise nur auf einer Dichtungsflächen-Seite vorhanden ist, hat die beidseitige Anordnung von nicht-vorgepreßten Stegen der Vorteil, daß Unebenheiten auf den beiden benachbarten Flanschseiten gut ausgeglichen werden können.

Die Breite der Stege in radialer Richtung kann in weiten Grenzen schwanken. Vorzugsweise beträgt die Breite eines Stegs, bezogen auf die radiale Gesamtbreite der Dichtung etwa 10 - 30%.

In einer besonders bevorzugten Ausführungsform ist etwa in der Mitte auf jeder der beiden Dichtungsflächen-Seiten ein nicht-vorgepreßter Steg vorgesehen, wobei beide Stege miteinander ausgerichtet sind, d.h., den gleichen radialen Abstand vom Mittelpunkt der Dichtung aufweisen. Beim Zusammenpressen der Stege während der Montage ergibt sich eine weitestgehend homogene Materialstruktur. In einer weniger bevorzugten Ausführungsform können die nicht-vorgepreßten Stege auf den beiden Dichtungsflächen-Seiten versetzt angeordnet sein.

Man kann -je nach Anwendungsfall- in radialer Richtung mehrere Stege gleicher Breite und gleicher Höhe vorsehen, man kann aber auch mehrere Stege unterschiedlicher Höhe und unterschiedlicher Breite vorsehen.

Besonders bevorzugt ist, daß die Dicke der vorgepreßten Teilbereiche etwa der Dicke des oder der jeweiligen nicht-vorgepreßten Teilbereiche entspricht. Gegen ein Verrutschen der Dichtung bei oder nach der Montage erweist sich eine erhöhte Rauhigkeit der Dichtungsflächen als besonders wirksam; erreicht wird diese durch den Füllstoff.

Besonders günstig erweisen sich die oben aufgezeigten Merkmale der Erfindung dann, wenn die Ringdichtung aus extrudiertem, gerecktem PTFE besteht.

Entscheidende Vorteile gegenüber bekannten Ringdichtungen werden in Verbindung mit den obengenannten speziellen Merkmalen der Erfindung dann erreicht, wenn die Dichtung als PTFE-Dichtung ausgebildet ist, wobei das PTFE-Material einen partikel- oder faserförmigen Füllstoff aus vorzugsweise Glasmaterial enthält. Dieser Füllstoff kann in einer Menge von beispielsweise 20 - 50% in dem PTFE-Material enthalten sein, beispielsweise als Glaspulver. Der Füllstoff bildet beim Vorpressen und beim Zusammenpressen der nicht-vorgepreßten Bereiche der Dichtung stabile Brücken, die das Dichtungsmaterial gut stabilisieren und das Material der Dichtung daran hindern, zu fließen.

Im folgenden werden Ausführungsbeispiele der Erfindung anhand der Zeichnung näher erläutert. Es zeigen:

Fig. 1 eine perspektivische Ansicht einer Ringdichtung,

Fig. 2 eine Schnittansicht entlang der Linie II-II in Fig. 1,

Fig. 3 eine vereinfachte Querschnittansicht einer abgewandelten Ausführungsform einer Ringdichtung,

Fig. 4 eine Querschnittansicht einer weiteren Ausführungsform einer Ringdichtung,

Fig. 5 eine teilweise geschnittene Ansicht einer Flanschverbindung mit eingelegter Ringdichtung, und

Fig. 6 die fertig montierte Flanschdichtung nach Fig. 5.

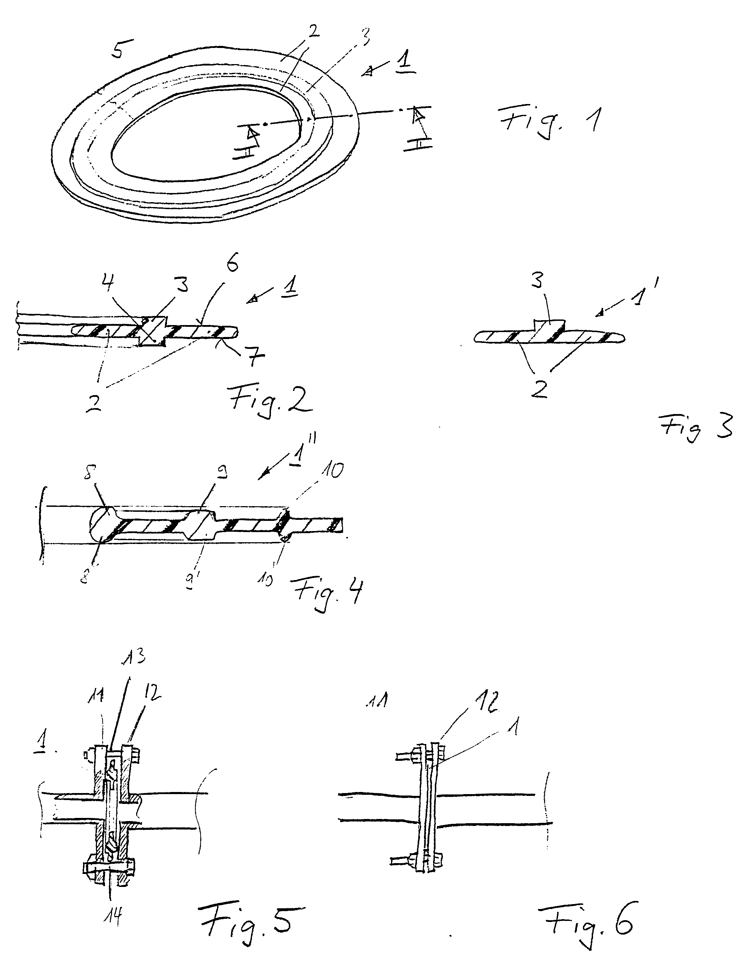

Fig. 1 zeigt eine Ringdichtung 1 aus extrudiertem, ge recktem Polytetrafluoräthylen (PTFE), das einen Füllstoff aus Glaspulver zu einem Anteil von ca. 50% enthält.

Die Ringdichtung 1 ist aus einer vorgefertigten PTFE-Schnur hergestellt, wobei die beiden Enden einer Schnur bei einer Naht 5 zusammengeschweißt sind, wie aus Fig. 1 ersichtlich ist. Die verschweißte Ringdichtung aus PTFE wird nach dem Zusammenschweißen der beiden Enden in einem inneren und einem äußeren Teilbereich 2 mit einem bestimmten Druck vorgepreßt, so daß das Material verdichtet und verfestigt wird. Dabei bilden die Glaspartikel in dem PTFE-Material Brükken, die das Material stabilisieren.

Wie aus Fig. 1 und 2 ersichtlich, ist der radial mittlere Bereich auf beiden Dichtungsflächen-Seiten 6 und 7 nicht vorgepreßt, so daß dort zwei nicht-vorgepreßte Stege 3 bzw. 4 vorhanden sind. Das Material im Bereich der Stege 3 und 4 ist noch relativ weich und im Vergleich zu den beiden vorgepreßten Bereichen 2 relativ leicht komprimierbar.

Fig. 5 zeigt eine Verbindung von Emailflanschen 11 und 12. Die gelöste Verbindung der Flansche bildet einen Zwischenraum, in dem die Ringdichtung 1 eingelegt wird, wobei die Ringdichtung auf einem unteren Bolzen 14 und einem weiteren, nicht gezeigten Bolzen ruht.

Nach dem Einlegen oder Einstecken der Ringdichtung 1 werden die Bolzen 13 und 14 sowie weitere, nicht dargestellte Bolzen eingezogen, so daß sich die Emailflansche 11 und 12 aufeinanderzubewegen. Bei diesem Vorgang werden die Innenflächen der beiden Flansche 11 und 12 zunächst gegen die Oberflächen der Stege 3 und 4 (siehe Fig. 2) gepreßt. Da die Stege nur eine geringe Oberfläche aufweisen, reichen relativ geringe Kräfte aus, um sie zusammenzudrücken. Die Bolzen werden soweit angezogen, bis die Stege 3 und 4 praktisch genau so weit komprimiert sind wie die vorgepreßten Bereiche 2. Dieser Endzustand ist in Fig. 6 skizziert.

Fig. 3 zeigt eine nicht ganz so günstige Ausführungsform. Die in Fig. 3 gezeigte Ringdichtung 1′ besteht ebenfalls aus extrudiertem, gerecktem PTFE, sie unterscheidet sich jedoch von der Ausführungsform nach Fig. 1 und 2 dadurch, daß lediglich auf der Oberseite ein nicht-vorgepreßter Bereich 3 vorhanden ist.

Fig. 4 zeigt eine weitere Ausführungsform einer Ringdichtung 1″. An der radial innenliegenden Kante der Ringdichtung 1″ ist ein nicht-vorgepreßter Wulst stehengelassen worden, der auf den beiden Seiten der Ringdichtung einen oberen Steg 8 und einen unteren Steg 8′ bildet. Im mittleren Bereich der Querschnitts der Ringdichtung 1″ sind zwei nicht-vorgepreßte Stege 9 und 9′ vorhanden. Die Höhe der Stege 9 und 9′ ist geringer als die Höhe der Stege 8 und 8′.

In der Nähe des Außenrandes befindet sich ein drittes Paar von nicht-vorgepreßten Stegen 10, 10′, deren Höhe der Höhe der Stege 8 bzw. 8′ entspricht.

Höhe und Breite der Stege können -je nach Anwendungsfall- in weiten Grenzen variiert werden, ebenso die Anzahl der Stege.

Entgegen den in den Zeichnungen dargestellten Ausführungsbeispielen brauchen die auf den beiden abgewandten Dichtungsflächen vorhandenen nicht-vorgepreßten Stege nicht miteinander ausgerichtet zu sein, sie können auch in radialer Richtung gegeneinander versetzt sein.

Mit den oben beschriebenen Ringdichtungen lassen sich Diffusionsdichte, chemisch beständige Dichtungen schaffen. Das PTFE-Material ist homogen und altert nicht. Aufgrund der Umfangsorientierung der Materialstruktur vermag die Ringdichtung enorme Querkräfte aufzunehmen. Das heißt: auch bei hohen auf die Innenkante der Dichtung einwirkenden Kräften wandert die Dichtung nicht nach außen aus. Die Dichtung eignet sich insbesondere für Emailflansche bis zu Querschnitten von 300 mm. Durch die nicht-vorgepreßten Bereiche lassen sich Unebenheiten von bis zu 0,3 mm/Seite ausgleichen.

**Ansprüche**

1. Ringdichtung mit in Umfangsrichtung orientierter Materialstruktur,
dadurch **gekennzeichnet**, daß die Dichtung in mindestens einem Teilbereich ihres (Radial-) Querschnitts vorgepreßt ist.

2. Ringdichtung nach Anspruch 1,
dadurch **gekennzeichnet**, daß der oder die nicht-vorgepreßten Bereiche (3, 4; 8, 8′, 9, 9′, 10, 10′) auf den einander abgewandten beiden Dichtungsflächen-Seiten einen oder mehrere Stege bilden.

3. Ringdichtung nach Anspruch 2,
dadurch **gekennzeichnet**, daß die Stege auf den beiden Dichtungsflächen-Seiten miteinander ausgerichtet sind, d.h. gleichen Abstand vom Mittelpunkt der Dichtung aufweisen.

4. Ringdichtung nach einem der Ansprüche 1 bis 3,
dadurch **gekennzeichnet**, daß die Dicke der vorgepreßten Teilbereiche (2) etwa der Dicke des oder der jeweiligen nicht-vorgepreßten überstehenden Teilbereiche (3, 4) entspricht.

5. Ringdichtung nach einem der Ansprüche 1 bis 4,
dadurch **gekennzeichnet**, daß die Dichtungsflächen zumindest teilweise angerauht sind.

6. Ringdichtung nach einem der Ansprüche 1 bis 5,
dadurch **gekennzeichnet**, daß die Ringdichtung aus extrudiertem, gerecktem PTFE besteht.

7. Ringdichtung nach Anspruch 6,
dadurch **gekennzeichnet**, daß das PTFE-Material einen partikel- oder faserförmigen Füllstoff aus vorzugsweise Glasmaterial enthält.

8. Ringdichtung, **gekennzeichnet** durch eine in Umfangsrichtung orientierte Materialstruktur.

Fig. 1

Fig. 2

Fig 3

Fig. 4

Fig. 5

Fig. 6